# EUROPEAN PATENT APPLICATION

(11) **EP 2 905 694 A1**
(43) Date of publication of application: **12.08.2015**
(21) Application number: 15153172.0
(22) Date of filing: 30.01.2015
(51) Int. Cl.: G06F 3/0488, G06F 1/16, H04M 1/02, G06F 3/041

(54) **Method of receiving touch event input and electronic device supporting the same**

(30) Priority: 11.02.2014 KR 20140015352
(71) Applicant: Samsung Electronics Co., Ltd, Gyeonggi-do 443-742 (KR)
(72) Inventor: Kim, Jeonghun, 443-742 Gyeonggi-do (KR); Park, Jaesun, 443-742 Gyeonggi-do (KR); Rhee, Bongjae, 443-742 Gyeonggi-do (KR)
(74) Representative: Birchenough, Lewis

(57) **Abstract**

Disclosed is a method of receiving a touch event by a portable terminal including a first display unit. The method includes recognizing connection of an accessory including a second display unit. The method also includes determining whether the second display unit is in a standby state for receiving a touch event. The method also includes activating a function corresponding to the second display unit when the second display unit is in the standby state. The method also includes, responsive to the second display unit receiving a selection input of a touch event, performing a function corresponding to the received touch event by the portable terminal. However, the present disclosure is not limited to the embodiment, and other embodiments can be made.

## Description

### TECHNICAL FIELD

The present disclosure relates to a method of receiving a touch event input and a portable terminal supporting the same and, more particularly, to a method of receiving a touch event input by a display unit of an external accessory and an electronic device supporting the same.

### BACKGROUND

In recent years, electronic devices have become the necessaries of modern life thanks to the rapidly increasing spread thereof. Portable terminals may be considered an example of the electronic devices.

Portable terminals include a touch screen for displaying various User Interfaces (UIs). The touch screen receives a user's selection input for the user interfaces, and the portable terminals perform a function corresponding to the selection input received by the touch screen. The portable terminals determine whether the user's selection input is received, by detecting a change in electrostatic capacity received by the touch screen or by detecting the user's selection input using a change in infrared light.

### SUMMARY

In the related art, when a user uses a portable terminal including an accessory, a user always has to open the accessory (e.g., cover) to perform the function the user wants.

In addition, when using the portable terminal including the accessory, the user has difficulties in ensuring rapid access to frequently used functions or user interfaces.

To address the above-discussed deficiencies, it is a primary object to provide a method of receiving a touch event input and an electronic device including a function thereof.

In accordance with one aspect of the present disclosure, a method is provided for receiving a touch event by a portable terminal including a first display unit. The method includes: recognizing connection of an accessory including a second display unit; determining whether the second display unit is in a standby state for receiving a touch event; activating a function corresponding to the second display unit when the second display unit is in the standby state; and when the second display unit receives a selection input of a touch event, performing a function corresponding to the received touch event by the portable terminal.

As described above, according to embodiments of the present disclosure, a user can rapidly perform the function the user wants, even when a portable terminal has an accessory mounted thereon. In addition, user convenience can be enhanced through communication and conjunction with mediums including user interface information.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device maybe implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram schematically illustrating configuration of a portable terminal;
FIG. 2 illustrates an embodiment of displaying a user interface by a second display unit of an accessory;
FIG. 3 illustrates an embodiment of displaying a user interface by a second display unit of an accessory;
FIG. 4 illustrates an embodiment of displaying a user interface by a second display unit of an accessory;
FIG. 5 illustrates an embodiment of displaying a user interface by a second display unit of an accessory;
FIG. 6 illustrates an embodiment of displaying a user interface by a second display unit of an accessory;
FIG. 7 illustrates an embodiment of displaying a user interface by a second display unit of an accessory;
FIG. 8 illustrates an embodiment of displaying a user interface by a second display unit of an accessory; and
FIG. 9 illustrates a process of providing a selected user interface by a second display unit.

### DETAILED DESCRIPTION

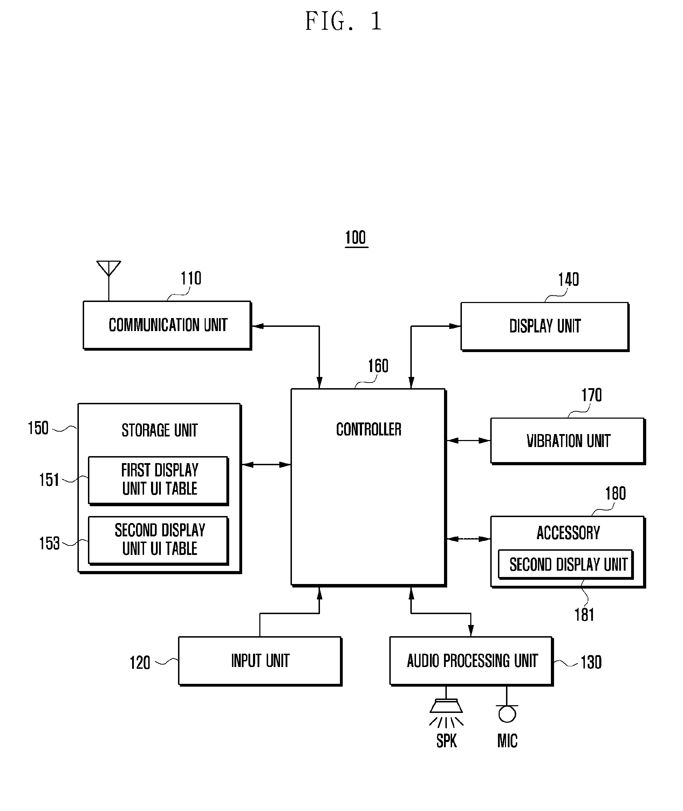

FIGURES 1 through 9, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system and method. Hereinafter, various embodiments of the present disclosure will be described in detail with reference to the accompanying drawings. It should be noted that the same elements will be designated by the same reference numerals although they are shown in different drawings. Further, a detailed description of a known function and configuration which may make the subject matter of the present disclosure unclear will be omitted. Hereinafter, it should be noted that only the descriptions will be provided that may help understanding the operations provided in association with the various embodiments of the present disclosure, and other descriptions will be omitted to avoid making the subject matter of the present disclosure rather unclear.

The electronic device can be a device including a communication function and a display function For example, the electronic device may include at least one of a smart phone, a tablet Personal Computer (PC), a mobile phone, a video phone, an e-book reader, a desktop PC, a laptop PC, a netbook computer, a PDA, a Portable Multimedia Player (PMP), an MP3 player, a mobile medical device, a camera, a wearable device (for example, a Head-Mounted-Device (HMD) such as electronic glasses, electronic clothes, an electronic bracelet, an electronic necklace, an electronic appcessory, an electronic tattoo, and a smart watch.

FIG. 1 illustrates a block diagram showing a configuration of a portable terminal 100 that is an example of an electronic device. Referring to FIG. 1, the portable terminal 100 can include a communication unit 110, an input unit 120, an audio processing unit 130, a first display unit 140, a storage unit 150, a controller 160, a vibration unit 170, and an accessory 180.

The communication unit 110 is a communication module for supporting a mobile communication service of the portable terminal 100. The communication unit 110 establishes a communication channel with a mobile communication system. To this end, the communication unit 110 may include a radio frequency transmitter for up-converting and amplifying a frequency of a transmitted signal and a receiver for low-noise amplifying a received signal and down-converting the frequency thereof.

The communication unit 110 can include one or more modules that enable wireless communication between the portable terminal 100 and the wireless communication system or between the portable terminal 100 and a network in which another portable terminal is located.

For example, the communication unit 110 can include at least one of a mobile communication unit, a wireless Internet unit, a short-range communication unit, and a location information unit.

The mobile communication unit transmits/receives a wireless signal to/from at least one of a base station, an external terminal, and a server in a mobile communication network. The wireless signal can include a voice call signal, a video call signal, or various types of data according to transmission/reception of SMS/multimedia messages.

The wireless Internet unit performs a function of accessing a wireless Internet. Examples of wireless Internet technology may include Wireless Local Area Network (WLAN) (Wi-Fi), Wireless broadband (Wibro), World Interoperability for Microwave Access (Wimax), and High Speed Downlink Packet Access (HSDPA).

The short-range communication unit performs a function for short-range communication. Examples of short-range communication technology may include Bluetooth, Radio Frequency Identification (RFID), Infrared Data Association (IrDA), Ultra Wideband (UWB), and ZigBee.

The location information unit performs a function of acquiring or identifying a location of the portable terminal 100. The location information unit 134 can acquire location information using a Global Navigation Satellite System (GNSS). Here, the term "Global Navigation Satellite System (GNSS)" is used to refer to radio navigation satellite systems moving around the Earth and sending reference signals with which predetermined types of radio navigation receivers can determine locations thereof on or near the surface of the Earth.

The GNSS includes the Global Position System (GPS) managed by the U.S., the Galileo managed by Europe, the Global Orbiting Navigational Satellite System (GLONASS) managed by Russia, the COMPASS managed by China, and the Quasi-Zenith Satellite System (QZSS) managed by Japan.

Additionally, the communication unit 130 can include a network interface (e.g., a Local Area Network (LAN) card) or a modem for connecting the portable terminal 100 to a network (e.g., Internet, LAN, Wide Area Network (WAN), telecommunication network, cellular network, satellite network or Plain Old Telephone Service (POTS)).

The input unit 120 includes input keys, function keys, various types of sensors, and UI input devices for receiving information depending upon a user's intention or a change in environment and configuring various types of functions. The input devices can provide direction keys, side keys, and shortcut keys, which are configured to perform particular functions, as physical or visual UIs to receive a user input through various methods such as a touch, a gesture, and a voice. Alternatively, without such UI devices, the input devices may directly identify a user's intention or a change in environment to provide an input to the terminal.

The input unit 120 can generate input values or measurement values of various sensors related to user settings and functional control of the portable terminal 100 and transfer the input values or the measurement values to the controller 160.

The audio processing unit 130 can include a speaker (SPK) for outputting audio signals transferred from the controller 160 and a microphone (MIC) for collecting audio signals according to activation of a particular application program in the portable terminal 100. The audio processing unit 130 may output audio signals received through the communication unit 110 when the communication unit 110 is activated.

According to one embodiment of the present disclosure, the audio processing unit 130 can output a pre-stored audio signal when the controller 160 recognizes connection of the accessory 180 including a second display unit 181 or determines that the second display unit 181 is in a standby state for receiving an input. In addition, the audio processing unit 130 may output an audio signal when the second display unit 181 receives a selection input of a touch event.

The first display unit 140 displays information input by or provided to a user as well as various menus of the portable terminal 100. That is, the first display unit 140 may provide various screens according to use of the portable terminal 100, for example, a standby screen, a menu screen, a message writing screen, and a phone-call screen. The first display unit 140 may be formed of a Liquid Crystal Display (LCD) or an Organic Light Emitted Diode (OLED) and may be included in an input means. In addition, the first display unit 140 may include a touch sensor placed on a display panel. The portable terminal 100 may provide various menu screens, which can be displayed based on the first display unit 140, according to support of the first display unit 140.

According to one embodiment of the present disclosure, the first display unit 140 can display different user interfaces according to whether the accessory 180 is recognized.

For example, when the accessory 180 is recognized, the first display unit 140 can display, on one surface thereof, a battery charging status of the portable terminal 100, a current communication standard (e.g., 3Generation (3G) or Long Term Evolution (LTE)), current time, and UIs related to unanswered mail or calls. In addition, the first display unit 140 may be placed on one surface, or a front surface, of the accessory 180.

The storage unit 150 can store application programs for reproducing various files stored therein and a key map or a menu map for operating the first display unit 140 as well as application programs necessary for functional operations according to one embodiment. Here, the key map and the menu map may have various forms.

That is, the key map can be a keyboard map, a 3*4 key map, a qwerty key map, or a control key map for controlling an operation of the currently activated application program. The menu map can be a control key map for controlling an operation of the currently activated application program. In addition, the menu map may also be a menu map for controlling an operation of the currently activated application program or a menu map having various menus, provided by the portable terminal 100, as items thereof. The storage unit 150 may be broadly divided into a program field and a data field.

The program field can store an Operating System (OS) for booting the portable terminal 100 or operating the aforementioned elements and applications programs for reproducing various files, such as an application program for supporting a phone-call function according to whether the portable terminal 100 supports the function, a web browser for accessing an Internet server, an MP3 application program for reproducing sound sources, an image output application program for reproducing photos, and an application program for reproducing videos.

According to one embodiment of the present disclosure, the storage unit 150 can include a first display unit User Interface (UI) table 151 and a second display unit User Interface (UI) table 153. The first display unit UI table 151 can store information on an UI displayed when the first display unit 140 is activated. For example, when the portable terminal 100 uses the first display unit 140 while being activated, the controller 160 can control the first display unit 140 to display the UI previously stored in the first display unit UI table 151.

The second display unit UI table 153 can store information on an UI displayed when the second display unit 140 is activated. For example, when the accessory 180 including the second display unit 140 is activated, the controller 160 may control the first display unit 140 to display the UI previously stored in the second display unit UI table 153.

In addition, when recognizing the connection of the accessory 180, the controller 160 maps a touch event received from the second display unit 181 with the second display UI table 153.

As a region for storing data generated as the portable terminal 100 is used, the data field may store phone book information, at least one icon according to a widget function, and various types of content. According to one embodiment of the present disclosure, the data field may store information on a region changed by a touch event that is received through the second display unit 181. For example, the data field may store the screen of the second display unit 181 changed by a user's touch event input.

According to one embodiment of the present disclosure, the data field may store user interfaces displayed when the first and second display units 140 and 181 are activated. In addition, the data field may store functions corresponding to the stored user interfaces. The user interfaces displayed when the first and second display units 140 and 181 are activated may be added, edited, and updated by a user.

The controller 160 can control power supply to the elements of the portable terminal 100 to support execution of initialization processes thereof and can control the elements when the initialization processes thereof are completed.

According to one embodiment of the present disclosure, the controller 160 can recognize connection of the detachable accessory 180 including the second display unit 181. The controller 160 can determine the connection of the accessory 180 according to whether the accessory 180 is attached to the portable terminal 100. Here, recognizing connection of the accessory 180 by the portable terminal 100 may include not only recognizing the accessory 180 physically attached to the portable terminal 100 but also recognizing the accessory 180 through the communication unit 110 of the portable terminal 100.

The controller 160 can determine whether the second display unit 181 is in a standby state for receiving a touch event. The controller 160 can determine whether the second display unit 181 is in the standby state for receiving a touch event, based on whether the accessory 180 covers the front surface or one surface of the first display unit 140 of the portable terminal 100.

The controller 160 can determine whether the second display unit 181 is in the standby state for receiving a touch event, based on whether the accessory 180 is located within a predetermined threshold distance from the first display unit 140. In addition, the controller 160 can determine whether the second display unit 181 is in the standby state for receiving a touch event, based on whether the first display unit 140 undergoes an electromagnetic change of a predetermined threshold value or higher. Furthermore, the controller 160 can determine whether the second display unit 181 is in the standby state for receiving a touch event, by detecting a mechanical motion and electromagnetic connection of the accessory 180 using a proximity sensor, an infrared sensor, or a Hall sensor.

The vibration unit 170 can generate various types of vibration under the control of the controller 160. To this end, the vibration unit 170 may include at least one vibration motor. The vibration unit 170 may be activated when a call signal is received in a silent vibration mode according to a user setting or when it is time to raise the alarm.

According to one embodiment of the present disclosure, the vibration unit 170 can activate the alarm when the controller 160 recognizes the connection of the accessory 180 including the second display unit 181 or the second display unit 181 is in the standby state for receiving a touch event. In addition, the vibration unit 170 may be activated when the second display unit 181 receives a selection input of a touch event.

The accessory 180 can be detachably coupled to the portable terminal. The accessory 180 may protect a screen or perform a particular function for the portable terminal 100. For example, the accessory 180 may include at least one of a power source for supplying electric power, a communication protocol, an independent storage medium, and an input unit through which a touch may be input.

The accessory 180 can have a battery integrated into the interior or on the exterior thereof. The battery integrated into the accessory 180 may be detachable. In addition, an auxiliary power supply, such as a solar panel, may be added to the accessory 180, thereby making it possible to increase operating time of the battery. For example, a solar panel array may be mounted on a surface of the accessory 180 to extend the activation time of the second display unit 181.

The accessory 180 can be used to cover the front surface or one portion of the portable terminal 100. The accessory 180 can have a modified form according to the size and shape of the portable terminal 100.

The accessory 180 can include the second display unit 181. The accessory 180 may be formed of leather, paper, plastic, or polyester. The second display unit 181 can be placed on at least one of the front and rear surfaces of the accessory 180. The second display unit 181 is detachable and therefore, the position of the second display unit 181 on the accessory 180 may be determined according to a user's intention. The second display unit 181 may be a detachable sticker or card capable of recognizing Near Field Communication (NFC), Radio Frequency Identification (RFID), and Quick Response (QR) code.

For example, the second display unit 181 can include a User Interface (UI) and a Graphic User Interface (GUI) and display UI elements through which a user or manufacturer enters an input through a method such as printing, engraving, embossing, sealing, or attaching.

The second display unit 181 can be an Active Matrix Organic Light Emitting Diode (AMOLED), a polyimide substrate, a sheet of electronic paper, a transparent window, a flexible display, or a transparent display. The UIs and the user interface on the second display unit 181 may be produced and displayed through a method, such as engraving, embossing, or sealing, such that a user notices a difference in texture when inputting a touch event. In addition, the second display unit 181 may include a virtual keypad.

The second display unit 181 can be automatically activated when the accessory 180 is located within a predetermined threshold distance from the first display unit 140 or when the first display unit 140 undergoes an electromagnetic change of a predetermined threshold value or higher.

The second display unit 181 can activate only one portion thereof according to a pre-stored method.

The second display unit 181 can be inactivated according to the pre-stored determination of the locking state of the portable terminal 100 or the second display unit 181. In addition, the second display unit 181 may always be in an inactive state irrespective of the recognition of the accessory 180 or may be activated according to the pre-stored method. For example, when the second display unit 181 is in an inactive state, biometric data (e.g., a fingerprint and a voice) and a predetermined input time and frequency of a touch event (e.g., a touch event input at every two seconds) may be stored in advance, and a user may activate the second display unit 181 using the pre-stored method.

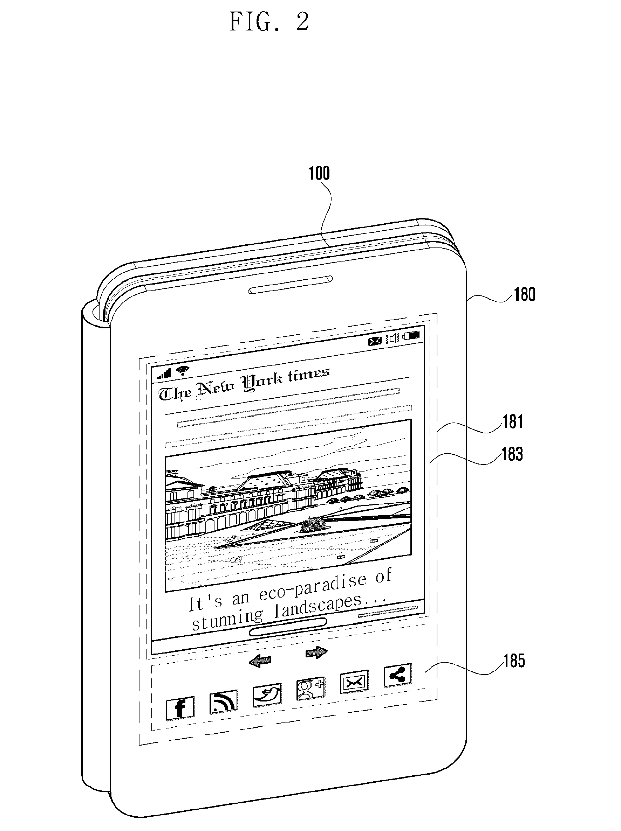

FIG. 2 illustrates an embodiment of displaying a user interface by a second display unit 181 of an accessory 180.

The second display unit 181 can display at least one of an output region UI 183 and an input region UI 185. As illustrated in FIG. 2, the second display unit 181 can include any one of a sheet of e-paper, a transparent display, a transparent window, a slim display, and a flexible display.

A controller 160 can recognize connection of the accessory 180 including the second display unit 181 and determine whether the second display unit 181 is in a standby state for receiving a touch event. When the second display unit 181 is in the standby state for receiving a touch event, the controller 160 may activate the function corresponding to the second display unit 181. Here, activating a function may include identifying a user interface table previously stored in a UI table 153 of the second display unit, determining, in the UI table 153 of the second display unit, a user interface to be displayed on the second display unit 181, and displaying the determined user interface on the second display unit 181.

When a user inputs a touch event on the displayed user interface, the second display unit 181 may receive the touch event. The controller 160 may detect the touch event input on the user interface and perform the function corresponding to the detected touch event.

In addition, the second display unit 181 can differently display the input region 185 depending upon the received user's touch event. For example, the second display unit 181 may change the color or shape of a result screen displayed on the output region 183 thereof based on the touch event input through the user's input means (e.g., the user's finger, a touch input means, or an S-pen) and display the changed result screen.

For example, as illustrated in FIG. 2, when recognizing the connection of the accessory 180, the controller 160 can control the second display unit to display the electronic newspaper "New York Times". In addition, the second display unit 181 may display, on the input region 185, a sequence UI capable of adjusting the sequence of the electronic newspaper, a social network service UI, a communication UI, and a mail UI. For example, when the user inputs a touch event on the social network service UI, the controller 160 may detect the touch event input and execute a social network service which is a function corresponding to the detected touch event input. Furthermore, the controller 160 may control the second display unit 181 to display a user interface screen related to the social network service.

The controller can store a portion of the result screen displayed on the second display unit 181 according to the user's selection. For example, when the user wants to separately display or store only the text "The New York Times" illustrated in FIG. 2, the controller may change the color or shape of the text "The New York Times" or separately store the text based on a touch event input through the input means.

For example, a social network service icon, a Wi-Fi (Wireless Fidelity) status UI, a mail UI, a call app UI, a phonebook UI, a message UI, a web access support UI, and an app menu screen UI may be displayed on the input region 185. By way of example, among the plural UIs, a menu screen UI previously stored by the user may be selected and displayed when the app menu screen UI is selected.

Furthermore, the user may separately download UIs, and the second display unit 181 may differently display the UIs according to the user's designation.

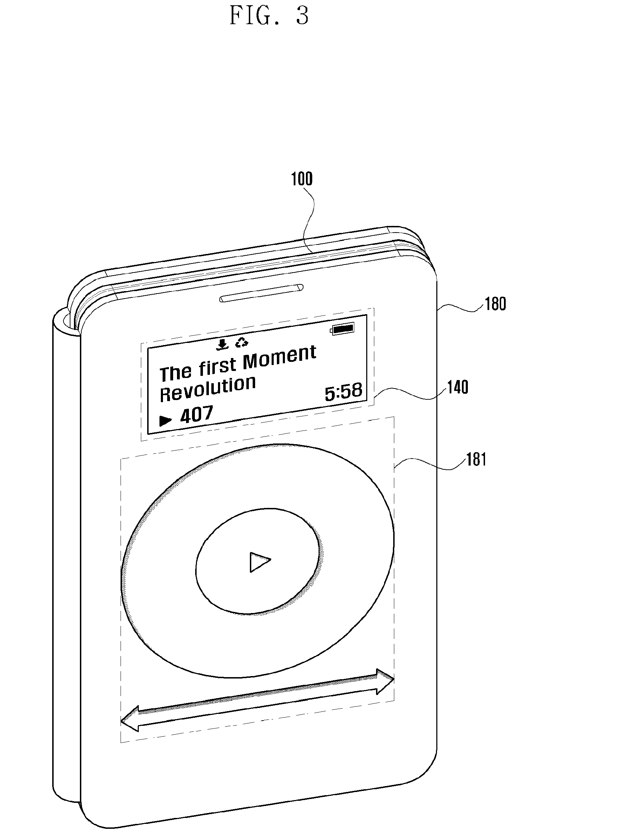

FIG. 3 illustrates an embodiment of displaying a user interface by a second display unit 181 of an accessory 180.

A first display unit 140 may display a battery charging status of a portable terminal 100 and a current communication standard (e.g., 3Generation (3G) or Long Term Evolution (LTE)).

According to one embodiment of the present disclosure, the second display unit 181 may include a touch event receiving region through which a touch event input may be received. For example, the touch event receiving region may be a region where the second display unit 181 may receive a touch event input and a controller 160 may execute the function corresponding to the received touch event input when a user inputs the touch event on a predetermined region.

For example, the accessory 180 may be formed by at least one of a method of physically printing at least one of text and an image onto the accessory 180, a method of physically sealing at least one of text and an image onto the accessory 180, a method of more physically concavely carving at least one of text and an image than a predetermined surface included in the accessory 180, and a method of more physically convexly carving at least one of text and an image than a predetermined surface included in the accessory 180.

When the user physically detects a predetermined surface included in the accessory 180, the touch event receiving region may be displayed in the indented shape. For example, a touch wheel region may be more concavely formed than the predetermined surface included in the accessory 180. Here, the concavely formed touch wheel region may have mutually different inclinations as well as a constant inclination.

Furthermore, the second display unit 181 can include at least one of a touch wheel region for generating an input signal corresponding to a touch event and a drag event, a selection key region for generating a selection signal corresponding to a selection input event, and a function execution region for generating an execution signal that executes a predetermined function.

For example, as illustrated in FIG. 3, a touch wheel shape and a selection shape capable of receiving a touch event input may be more concavely formed physically than the predetermined surface included in the accessory 180. If the user inputs a touch event on the formed touch wheel shape, an output screen displayed on the first display unit 140 and an audio output from an audio processing unit 130 may be changed. For example, while "The first Moment Revolution" displayed on the first display unit 140 is being reproduced, if an input on a portion of the touch wheel region displayed on the second display unit 181 is dragged toward the right, the controller 160 may change the function (e.g., music or video) displayed on the first display unit 140.

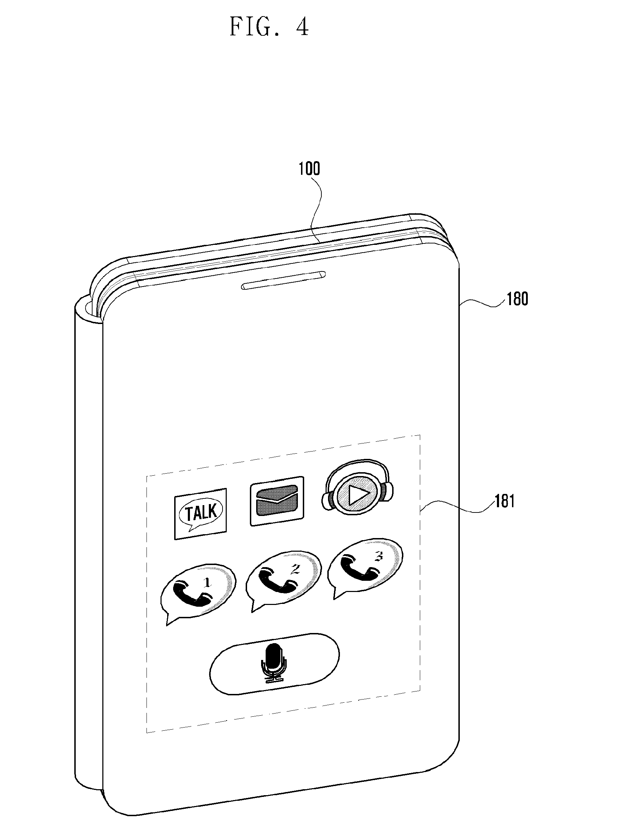

FIG. 4 illustrates an embodiment of displaying a user interface by a second display unit 181 of an accessory 180.

According to one embodiment of the present disclosure, a second display unit 181 can include at least one of a detachable Radio Frequency Identification (RFID) tag capable of receiving a touch event input and a code including pre-stored information. For example, the second display unit 181 may include a card or sticker constituted by an RFID tag and a code including pre-stored information.

Activating the function corresponding to the second display unit can include recognizing at least one of the RFID tag and the code and activating the function corresponding to the recognized RFID and/or code.

As illustrated in FIG. 4, the second display unit 181 can display a detachable user interface. A social network service UI, a mail UI, and an audio UI may be displayed on the user interface. In addition, the second display unit 181 may display a quick call UI through which a user may perform a quick call connection using a preset phone number. Furthermore, the second display unit 181 may display an audio UI and a video UI. Here, functions corresponding to the respective displayed UIs may be configured in advance.

For example, when the user inputs a touch event on the quick call UI, the controller 160 can receive the touch event input and execute a phone-call function corresponding to the received touch event input. In an example embodiment, when the user stores, in a storage unit 150, a function for making a call to a phone number 010-8322-3452 corresponding to the quick call UI and then inputs a touch event for the quick call UI displayed on the second display unit 181 of the accessory 180, the controller 160 may control a communication unit 110 to make a call to the phone number 010-8322-3452.

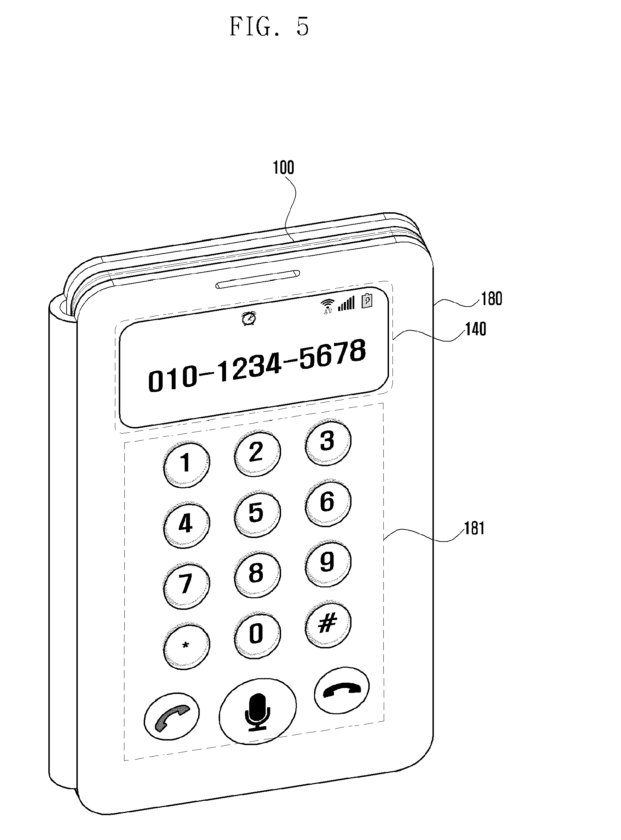

FIG. 5 illustrates an embodiment of displaying a user interface by a second display unit 181 of an accessory 180.

According to one embodiment of the present disclosure, the second display unit 181 can include a touch event receiving region through which a touch event input may be received. For example, the touch event receiving region may be a region where the second display unit 181 may receive a touch event input and a controller 160 may execute the function corresponding to the received touch event input when a user inputs the touch event on a predetermined region.

For example, the accessory 180 can be formed by at least one of a method of physically printing at least one of text and an image onto the accessory 180, a method of physically sealing at least one of text and an image onto the accessory 180, a method of more physically concavely carving at least one of text and an image than a predetermined surface included in the accessory 180, and a method of more physically convexly carving at least one of text and an image than a predetermined surface included in the accessory 180.

The second display unit 181 can include at least one of a detachable Radio Frequency Identification (RFID) tag capable of receiving a touch event input and a code including pre-stored information. For example, the second display unit 181 may include a card or sticker constituted by an RFID tag and code including pre-stored information.

In addition, the second display unit 181 can display number (e.g., 0, 1, 2, 3, 4, 5, 6, 7, 8, and 9) UIs, a sharp sign (#) UI, and an asterisk (*) UI. A first display unit 140 can display a status of a portable terminal, a presence or absence of a battery, and a communication status. Furthermore, when the second display unit 181 receives a touch event input for the displayed user interface, the first display unit 140 can display the function corresponding to the received touch event input.

For example, as illustrated in FIG. 5, when the user sequentially inputs touch events corresponding to numbers "01012345678" for the number UIs displayed on the second display unit 181, the controller 160 can control the function corresponding to the touch event inputs received by the second display unit 181 to display the numbers "01012345678" on the first display unit 140.

Furthermore, for example, the second display unit 181 can display a phone-call UI. When the user inputs numbers for the number UIs and a touch event for the phone-call UI, the controller 160 can make a call to the corresponding phone number by controlling a communication unit 110 in response to the input touch event. Moreover, the second display unit 181 can include a phone-call UI, a call termination UI, and a voice UI.

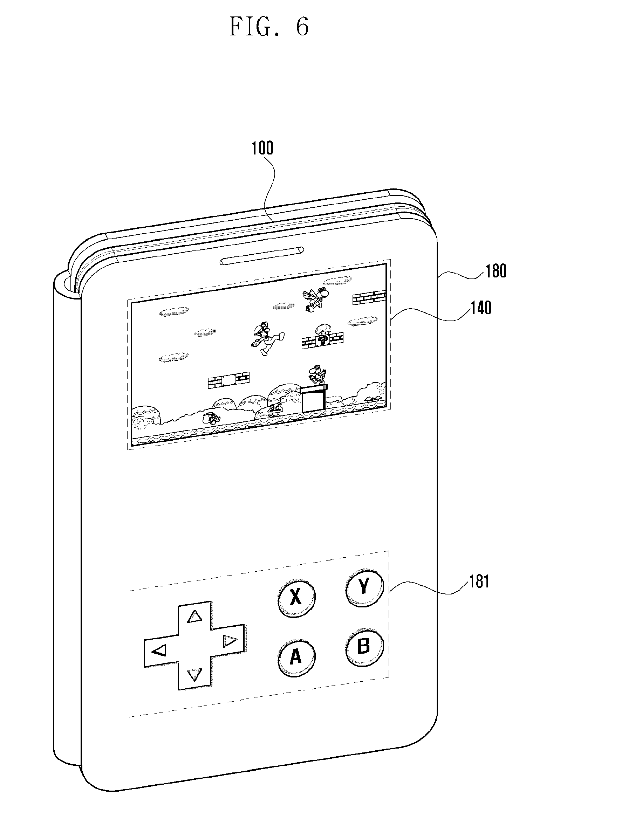

FIG. 6 illustrates an embodiment of displaying a user interface by a second display unit 181 of an accessory 180.

According to one embodiment of the present disclosure, the accessory 180 can include the second display unit 181 for displaying UI elements through which a user or manufacturer enters an input through a method such as printing, engraving, embossing, sealing, or attaching.

The second display unit 181 can display a game UI capable of controlling a pre-stored game. For example, a user can download and execute a game application. The first display unit 140 of a portable terminal 100 can display a running game.

As illustrated in FIG. 6, the second display unit 181 can display a detachable controller UI. For example, in the example of a game based on the main character, the user can input a touch event for the game UI displayed on the second display unit 181. As the controller 160 receives the touch event, the controller 160 can perform the function corresponding to the received touch event to change the screen displayed on the first display unit 140.

Furthermore, as illustrated in FIG. 6, functions corresponding to character (e.g., X, Y, A, and B) UIs may be stored in a storage unit 150. When receiving a touch event input corresponding to each character UI, the controller 160 may perform the function corresponding to the received touch event input and display the function on the first display unit 140.

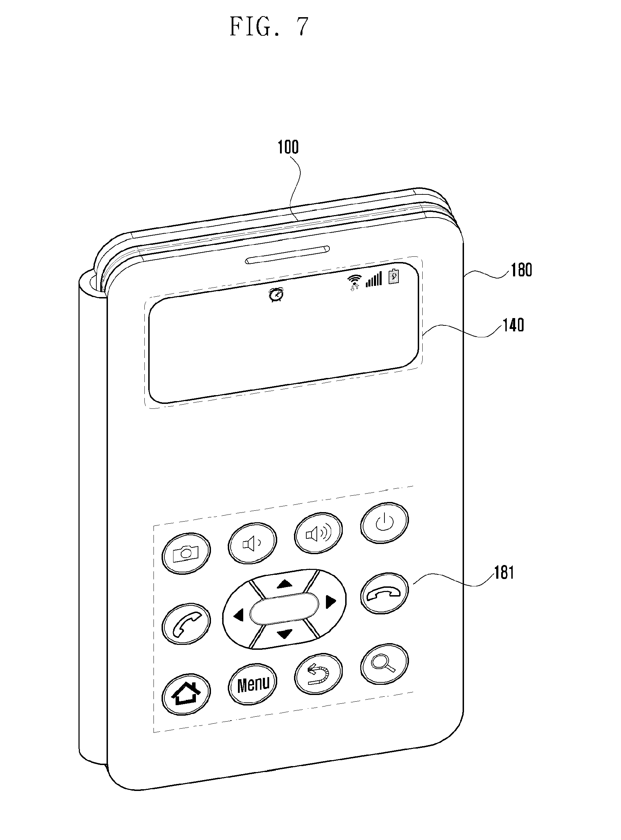

FIG. 7 illustrates an embodiment of displaying a user interface by a second display unit 181 of an accessory 180.

The accessory 180 can include the second display unit 181 which is detachably coupled thereto. For example, the second display unit 181 may be a detachable sticker or card capable of recognizing Near Field Communication (NFC), Radio Frequency Identification (RFID), and Quick Response (QR) code.

A portable terminal 100 can include a data recognizer and a data recognizing application that recognizes NFC, RFID, and QR code. What is recognized by the portable terminal 100 may be displayed using an RFID chip or a QR code chip printed on a surface of a card or a sticker. The second display unit 181 may display an icon corresponding to data included in at least one of the recognized NFC, RFID, and QR code.

For example, as illustrated in FIG. 7, the second display unit 181 can include a camera UI, an audio UI, a power supply UI, a phone-call UI, and a menu UI. In addition, the first display unit 140 may display a status of the portable terminal 100, a status of a battery, and a degree of communication.

For example, when a user inputs a touch event for a power-supply termination UI, the controller 160 may make a control such that the portable terminal 100 is terminated, in response to the received touch event input.

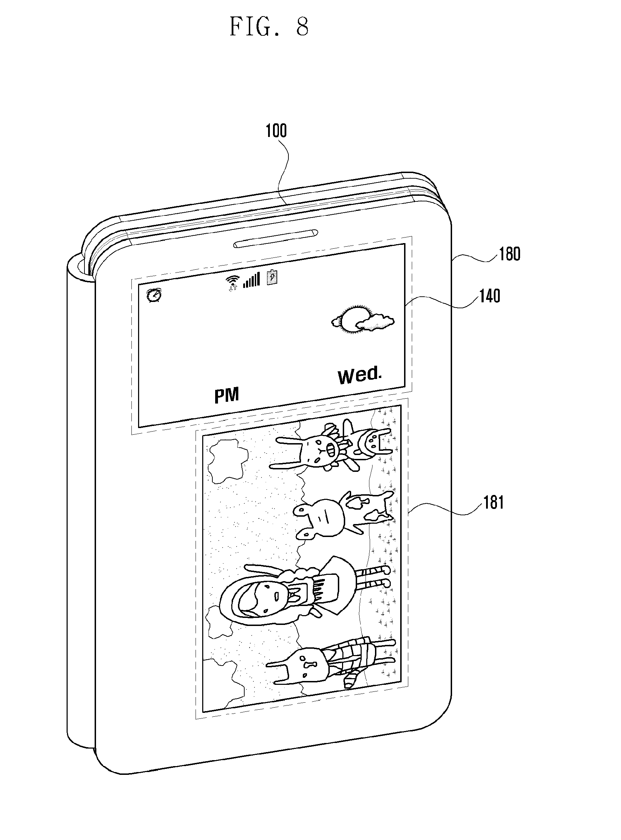

FIG. 8 illustrates an embodiment of displaying a user interface by a second display unit 181 of an accessory 180.

A controller can control the second display unit 181 to display a user interface, recognize the change of the displayed user interface, configure the function corresponding to the recognized user interface, and store the configured function in a storage unit 150.

A first display unit 140 can display a status of a battery, a current weather condition, and a current time and date. In addition, the second display unit 181 may distinguishably display a region where a selection input of a touch event is received and other regions of the second display unit through a predetermined method. The distinguishably displayed regions may be stored or updated through a pre-configured method. For example, the second display unit 181 may display a Graphic User Interface (GUI) region.

For example, a user can display a UI on the graphic user interface displayed on the second display unit 181, change the displayed UI, and store the function corresponding to the UI. By way of example, the user may configure the function corresponding to a frog UI as a phone-call function. Thereafter, when the user inputs a touch event for the frog UI, the controller 160 may receive the touch event and control a communication unit 110 to perform the phone-call function in response to the received touch event.

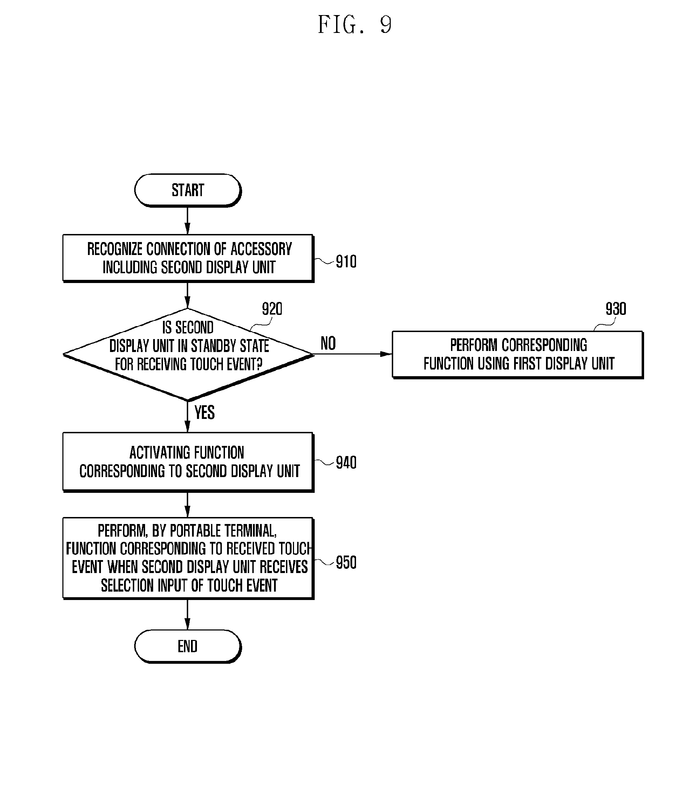

FIG. 9 illustrates a process of providing a selected user interface by a second display unit.

In operation 910, a controller 160 recognizes connection of an accessory 180 including a second display unit 181. The controller 160 may determine the connection of the accessory 180 according to whether the accessory 180 is attached to a portable terminal 100. Here, recognizing connection of the accessory 180 by the portable terminal 100 may include not only recognizing the accessory 180 physically attached to the portable terminal 100 but also recognizing the accessory 180 through the communication unit 110 of the portable terminal 100.

After recognizing the connection of the accessory 180, the controller 160 determines whether the second display unit 181 is in a standby state for receiving a touch event, in operation 920. The controller 160 may make the determination based on whether the accessory 180 covers a first display unit 140 of the portable terminal 100. The controller 160 may determine whether the first display unit 140 of the portable terminal 100 is covered with the accessory 180, using a sensor that makes a determination depending upon a predetermined threshold value from the first display unit 140. In addition, the controller 160 may make the determination based on whether the accessory 180 is located within a predetermined threshold distance from the first display unit 140.

When it is determined that the accessory 180 does not cover the first display unit 140, the controller 160 performs the corresponding function using the first display unit 140, in operation 930.

When it is determined that the second display unit 181 is in the standby state for receiving a touch event, the controller 160 may activate the function corresponding to the second display unit 181, in operation 940. Here, activating the function may include identifying a User Interface (UI) table of the second display unit stored in a storage unit 150, determining, in the UI table of the second display unit, a user interface to be displayed on the second display unit 181, and displaying the determined user interface on the second display unit 181.

Thereafter, in operation 950, when the second display unit 181 receives a selection input of a touch event, the controller 160 performs the function corresponding to the received touch event. Here, performing the function may mean detecting a touch event input for the displayed user interface and performing the function corresponding to the detected touch event input by the controller 160.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method of receiving a touch event by a portable terminal comprising a first display unit, the method comprising:
recognizing connection of an accessory comprising a second display unit;
determining whether the second display unit is in a standby state for receiving a touch event;
activating a function corresponding to the second display unit when the second display unit is in the standby state; and
responsive to the second display unit receives a selection input of a touch event, performing a function corresponding to the received touch event by the portable terminal.

2. The method of claim 1, wherein the determination of whether or not the second display unit is in the standby state for receiving a touch event comprises:
determining whether the second display unit is in the standby state based on whether the accessory is located within a predetermined threshold distance value from the first display unit.

3. The method of claim 1, wherein activating of the function corresponding to the second display unit comprises:
identifying a second display unit user interface (UI) table previously stored in the portable terminal;
determining a user interface to display in the second display unit user interface table on the second display unit; and
displaying the determined user interface on the second display unit.

4. The method of claim 1, wherein the second display unit comprises:
a touch event receiving region capable of receiving a touch event input,
wherein the touch event receiving region is formed by at least one of a method of physically printing at least one of text and an image onto the accessory, a method of physically sealing at least one of text and an image onto the accessory, a method of more physically concavely carving at least one of text and an image than a predetermined surface comprised in the accessory, and a method of more physically convexly carving at least one of text and an image than a predetermined surface comprised in the accessory, and
wherein the touch event receiving region comprises at least one of a touch wheel region for generating an input signal corresponding to a touch event and a drag event, a selection key region for generating a selection signal corresponding to a selection input event, and a function execution region for generating an execution signal that executes a predetermined function.

5. The method of claim 4, wherein performing of the function corresponding to the received touch event by the portable terminal comprises:
responsvive to a touch event input being received through the determined touch event receiving region, performing a function corresponding to the received touch event input by the portable terminal.

6. The method of claim 1, wherein the second display unit comprises at least one of a Radio Frequency Identification (RFID) tag and a code comprising information stored in advance, wherein the RFID tag and the code are detachable and configured to receive a touch event input.

7. The method of claim 6, wherein activating of the function corresponding to the second display unit comprises:
recognizing at least one of the RFID tag and the code; and
activating a function corresponding to at least one of the recognized RFID and code, and
wherein performing of the function corresponding to the received touch event by the portable terminal comprises:
responsive to a user interface corresponding to at least one of the RFID tag and the code is displayed on the accessory, receiving a touch event input for the user interface; and
performing a function corresponding to the touch event input.

8. The method of claim 1, further comprising:
displaying a user interface, by the second display unit, after activating the function corresponding to the second display unit;
recognizing that the displayed user interface is changed;
configuring a function corresponding to the recognized user interface; and
storing the configured function in the portable terminal.

9. A portable terminal comprising a first display unit, comprising:
a controller configured to recognize connection of an accessory comprising a second display unit, determine whether the second display unit is in a standby state for receiving a touch event, activate a function corresponding to the second display unit when the second display unit is in the standby state, and responsive to the second display unit receiving a selection input of a touch event, perform a function corresponding to the received touch event by the portable terminal; and
memory configured to store a second display unit User Interface (UI) table corresponding to the second display unit.

10. The portable terminal of claim 9, further comprising:
a sensor configured to determine whether the accessory is located with a predetermined threshold distance value from the first display unit.

11. The portable terminal of claim 9, wherein the controller configured to identify a second display unit user interface (UI) table previously stored in the storage unit, determine a user interface to display on the second display unit in the second display unit user interface table, and control the second display unit to display the determined user interface.

12. The portable terminal of claim 11, wherein the second display unit comprises any one of a sheet of e-paper, a transparent display, a transparent window, a slim display, and a flexible display.

13. The portable terminal of claim 10, wherein the second display unit comprises:
a touch event receiving region is configured to receive a touch event input,
wherein the touch event receiving region is formed by at least one of a method of physically printing at least one of text and an image onto the accessory, a method of physically sealing at least one of text and an image onto the accessory, a method of more physically concavely carving at least one of text and an image than a predetermined surface comprised in the accessory, and a method of more physically convexly carving at least one of text and an image than a predetermined surface comprised in the accessory,
wherein the touch event receiving region comprises at least one of a touch wheel region configured to generate an input signal corresponding to a touch event and a drag event, a selection key region configured to generate a selection signal corresponding to a selection input event, and a function execution region configured to generate an execution signal that executes a predetermined function, and
wherein the controller, responsive to a touch event input being received through the determined touch event receiving region, is configured to perform a function corresponding to the received touch event input.

14. The portable terminal of claim 13, wherein the controller is configured to recognize at least one of an RFID tag and a code and activates a function corresponding to at least one of the recognized RFID and code, and
wherein the controller, responsvie to a user interface corresponding to at least one of the RFID tag and the code being displayed on the accessory, is configured to receive a touch event input for the user interface and perform a function corresponding to the touch event input.

15. The portable terminal of claim 9, wherein the controller is configured to control the second display unit to display a user interface, recognize that the displayed user interface is changed, configure a predetermined function corresponding to the recognized user interface, and store the configured function in the storage unit.
